(19) **Europäisches Patentamt / European Patent Office / Office européen des brevets**

(11) **EP 4 660 236 A1**

(12) **EUROPEAN PATENT APPLICATION**

(43) Date of publication:
**10.12.2025   Bulletin 2025/50**

(21) Application number: **24180073.9**

(22) Date of filing: **05.06.2024**

(51) International Patent Classification (IPC):
***C08L 23/12*** *(2006.01)*

(52) Cooperative Patent Classification (CPC):
(C-Sets available)
**C08L 23/12;** C08L 2207/02; C08L 2207/062;
C08L 2207/20                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Basell Poliolefine Italia S.r.l.
20121 Milano (IT)**

(72) Inventors:
• **SCHIRMEISTER, Carl**
 **65926 Frankfurt/M. (DE)**
• **LICHT, Erik**
 **65926 Frankfurt/M. (DE)**
• **KÖHLER, Rainer**
 **65926 Frankfurt/M. (DE)**
• **DUREEV, Mikhail**
 **65926 Frankfurt/M (DE)**
• **ROHRMANN, Jürgen**
 **65926 Frankfurt/M. (DE)**

• **SCHÄCHTELE, Sebastian**
 **65926 Frankfurt/M. (DE)**
• **WIESER, Patrick**
 **65926 Frankfurt/M. (DE)**
• **REISER, René**
 **65926 Frankfurt/M. (DE)**
• **NOWAG, Mark**
 **65926 Frankfurt/M. (DE)**
• **MAHREN, Guntram**
 **65926 Frankfurt/M. (DE)**
• **HEES, Timo**
 **65926 Frankfurt/M. (DE)**
• **KESSLER, Yannik**
 **65926 Frankfurt/M. (DE)**
• **DÖTSCH, Diana**
 **65926 Frankfurt/M. (DE)**
• **ELSAS, Katharina**
 **65926 Frankfurt/M. (DE)**

(74) Representative: **LyondellBasell
c/o Basell Poliolefine Italia
Intellectual Property
P.le Donegani 12
44122 Ferrara (IT)**

(54)   **RECYCLATE-BASED POLYMER COMPOSITIONS FOR AUTOMOTIVE PARTS**

(57)   A polymer composition comprises
A) 8 % to 35 % by weight of heterophasic propylene polymer,
B) 3 % to 20 % by weight of polyolefin elastomer,
C) 0 % to 10 % by weight of high-density polyethylene (HDPE),

D) 10 % to 50 % by weight of recycled propylene polymer, and
E) 1 % to 25 % by weight of mineral filler,
and has a melt volume flow rate (MVR, ISO 1133-1, 230 °C, 2.16 kg) of 20 cm$^3$/10 min or less.

**EP 4 660 236 A1**

(52) Cooperative Patent Classification (CPC): (Cont.)

C-Sets
**C08L 23/12, C08L 23/16, C08L 23/14,
C08L 23/0815, C08L 23/0815, C08K 3/34**

**Description**

## FIELD OF THE INVENTION

The present disclosure relates to a polymer composition comprising recycled propylene polymer and showing excellent mechanical properties, for use in the automobile sector.

## BACKGROUND OF THE INVENTION

The use of polypropylene compounds based on post-consumer and post-industrial plastic recyclates is essential to reduce the material-related $CO_2$ footprint, to address the plastic waste issue, and to comply with current and future regulatory requirements in the form of mandatory recycling quotas. However, recyclate-based compounds must at the same time meet the highest material requirements for the respective application, e.g. in the automobile sector. These include e.g. balanced mechanical properties even at low temperatures (stiffness/impact resistance), good processability (such as in injection molding especially as a drop-in solution in existing injection molds), and durability.

US11,203,683B2 teaches a polyolefin composition, the composition comprising a blend of polyolefins. The blend comprises 65 to 95 % by weight of polypropylene and 5 to 35 % by weight of high-density polyethylene, and may be recycled material. However, the melt properties are still undesired, as the melt flow rate of the polyolefin compositions is reported to be relatively high.

There is a need for polymer composition based on post-consumer (PCR) and post-industrial (PIR) polypropylene feedstocks, having a reduced $CO_2$ footprint and meeting processing requirements and material properties.

## SUMMARY OF THE INVENTION

According to the present disclosure, a polymer composition comprises:

A) 8 % to 35 % by weight of heterophasic propylene polymer,

B) 3 % to 20 % by weight of polyolefin elastomer,

C) 0 % to 10 % by weight of high-density polyethylene (HDPE),

D) 10 % to 50 % by weight of recycled propylene polymer, and

E) 1 % to 25 % by weight of mineral filler,

the polymer composition having a melt volume flow rate (MVR, ISO 1133-1:2011, 230 °C, 2.16 kg) of 20 $cm^3$/10 min or less,

wherein the amounts of A), B), C), D) and E) are based on the weight of the polymer composition.

It has been found that the polymer compositions of the disclosure are particularly suitable for automotive interior applications, e.g. interior trims, and that they perform analogous to material without any recyclate content. Specifically, the PIR- and PCR-based polymer compositions exhibit comparable mechanical properties to the conventional (virgin-based) polymer compositions, however, with unexpectedly improved elongation at break and low melt volume flow rate, MVR. The injection molding shrinkage of the polymer compositions of the disclosure is also advantageously comparable to conventional (virgin-based) material.

While multiple embodiments are disclosed, still other embodiments will become apparent to those skilled in the art from the following detailed description. As will be apparent, certain embodiments, as disclosed herein, are capable of modifications in various obvious aspects, all without departing from the spirit and scope of the claims as presented herein. Accordingly, the following detailed description is to be regarded as illustrative in nature and not restrictive

## DETAILED DESCRIPTION OF THE INVENTION

In the context of the present disclosure;

- the percentages are expressed by weight, unless otherwise specified;

- the total weight of a composition sums up to 100% by weight, unless otherwise specified;

- the term "consisting", when referring to a polymer or to a polymer composition, mixture or blend, should be construed to mean "consisting or consisting essentially of';

- the term "consisting essentially of" means that, in addition to those components which are mandatory, other components may also be present in the material, provided that the essential characteristics of the material are not materially affected by their presence. Examples of components that, when present in customary amounts, do not materially affect the characteristics of a polymer or of polymer compositions, mixtures or blends are catalyst residues, antistatic agents and processing aids;

- the term "copolymer" refers to a polymer derived from the intentional polymerization of at least two different comonomers, i.e. the term "copolymer" includes terpolymers;

- the term "virgin" refers to a plastic material that originates from feedstock and that has never been used by a consumer (that is, it refers to a non-recycled material);

- the terms "pre-consumer waste" and "post-industrial waste" are synonyms and designate a material diverted from the waste stream originating from a manufacturing process (it might be material trimmings, faulty items, overstock raw materials, excess inventory, etc.);

- the term "post-consumer waste" designate a material that has been converted into a product, used by the consumer, and discarded after use;

- the term "PCR" or "post-consumer resin" refers to a plastic material originating from the mechanical recycling of a post-consumer waste;

- the term "PIR" or "post-industrial resin" refers to a plastic material originating from the mechanical recycling of a post-industrial waste;

- "mechanical recycling" refers to operations that aim to recover plastic material via mechanical processes, like sorting, grinding, washing, separating, drying, re-granulating and compounding, thus producing PCRs that can be converted into plastics products.

According to the present disclosure, the polymer composition comprises:

A) 8 to 35 % by weight, preferably from 10 to 30 % by weight, of heterophasic propylene polymer,

B) 3 to 20 % by weight, preferably 5 to 15 % by weight, of polyolefin elastomer,

C) 0 to 10 % by weight, preferably 2 to 8 % by weight, of high-density polyethylene (HDPE),

D) 10 to 50 % by weight, preferably from 15 to 37 % by weight, of recycled propylene polymer, and

E) 1 to 25 % by weight of mineral filler,

the polymer composition having a melt volume flow rate (MVR, ISO 1133-1:2011, 230 °C, 2.16 kg) of 20 cm$^3$/10 min or less,

wherein the amounts of A), B), C), D) and E) are based on the weight of the polymer composition.

Preferably, the MVR of the polymer composition of the present disclosure is in a range of from 10 to 17 cm$^3$/10 min (MVR, ISO 1133-1:2011, 230 °C, 2.16 kg).

Preferably, the polymer composition has a mass melt flow rate (MFR, ISO 1133-1:2011, 230 °C, 2.16 kg) of 15 g/10 min or less, preferably the MFR value is in a range of from 8 to 14.5 g/10 min.

Preferably, the polymer composition further comprises F) up to 15 % by weight of propylene polymer having an MFR value (ISO 1133-1:2011, 230 °C, 2.16 kg) of 100 g/10 min or more, preferably wherein the propylene polymer is a propylene homopolymer.

Preferably, the polymer composition further comprises G) up to 10 % by weight of further additives.

Preferably, the polymer composition has a tensile strain at break (ISO 527-1,-2) equal to or greater than 200%, preferably in a range of from 210% to 400%, more preferably in a range of from 230 % to 350 %, still more preferably in a range of from 250 % to 320 %.

Preferably, the polymer composition has:

- a longitudinal shrinkage lower than 0.8%, more preferably in a range of from 0.65 % to 0.75 %, and/or
- a transversal shrinkage lower than 1.1%, more preferably in a range of from 0.95 % to 1.05 %,

wherein the shrinkage is measured in accordance with the method described in the experimental part.

Preferably, the polymer composition has a heat deflection temperature (HDT A, DIN 53461, 1820 kPa) in a range of from 45 to 65 °C, more preferably in a range of from 48 to 55 °C. Preferably, the polymer composition has a heat deflection temperature (HDT B, DIN 53461, 455 kPa) in a range of from 80 to 100 °C, more preferably in a range of from 85 to 95 °C.

Preferably, the polymer composition has a Vicat A softening temperature (ISO 306:2022) in a range of from 120 to 140 °C, more preferably in a range of from 125 to 135 °C. Preferably, the polymer composition has a Vicat B softening temperature (ISO 306:2022, 5 kg) in a range of from 45 to 60 °C, more preferably in a range of from 50 to 55 °C.

Preferably, component A) is a heterophasic propylene polymer comprising:

- from 10 to 95 % by weight of a polymer fraction (A1) comprising or consisting of a propylene polymer containing from 0 to 10 % by weight, based on the weight of the polymer fraction (A1), of copolymerized units deriving from ethylene and/or from at least one C4-C10 alpha-olefin, the polymer fraction (A1) having solubility in xylene at 25°C equal to or lower than 5 % by weight, based on the weight of the polymer fraction (A1); and

- from 5 to 90 % by weight of a polymer fraction (A2) comprising or consisting of an ethylene polymer with from 30 to 60 % by weight, preferably from 40 to 55% by weight, based on the weight of the polymer fraction (A2), of polymerized units derived from propylene and/or from at least one C4-C10 alpha-olefin, the polymer fraction (A2) having solubility in xylene at 25°C XS(A2) greater than 70 % by weight, based on the weight of the polymer fraction (A2),

wherein the amount of fraction (A1) and of fraction (A2) is based on the weight of the heterophasic propylene polymer (A).

In one preferred embodiment, the heterophasic propylene polymer (A) comprises from 60 to 85 % by weight, preferably 70 to 80 % by weight, of the polymer fraction (A1) and from 15 to 40 % by weight, preferably from 20 to 30 % by weight, of the polymer fraction (A2), based on the total weight of the heterophasic propylene polymer (A).

Preferably, the polymer fraction (A1) comprises or consists of a propylene homopolymer having mass melt flow rate MFR(A1) in the range from 10 to 30 g/10min (ISO 1133-1:2011, 230 °C, 2.16 kg) and solubility in xylene at 25°C XS(A1) lower than 3.0 % by weight, based on the weight of the polymer fraction (A1).

The polymer fraction (A2) is chemically different from the component B) of the polymer composition, and preferably the polymer fraction (A2) has solubility in xylene at 25°C in the range from 70 to 90 % by weight, based on the weight of the polymer fraction (A2).

Preferably, component A) is a heterophasic propylene polymer having at least one, more preferably all, the following properties:

- a mass melt flow rate MFR(A) (ISO 1133-1 :2011, 230 °C/2.16 kg) in a range of from 4 to 15 g/10min, preferably from 5 to 11 g/10 min; and/or

- solubility in xylene at 25°C XS(A) ranging from 15 to 35 % by weight, based on the weight of the polymer composition; and/or

- an intrinsic viscosity of the fraction soluble in xylene at 25°C XSIV(A) in the range from 2.0 to 4.0 dl/g, the XSIV being measured in tetrahydronaphthalene at 135 °C according to the method described in the experimental part; and/or

- a flexural modulus in a range of from 800 to 1200 MPa (ISO 178); and/or

- a tensile modulus in a range of from 700 to 1000 MPa (ISO 527-1, -2) ; and/or

- a tensile stress at break in a range of from 15 to 19 MPa (ISO 527-1, -2); and/or

- a tensile stress at yield in a range of from 20 to 24 MPa (ISO 527-1, -2); and/or

- a tensile strain at break in a range of from 300 to 500 % (ISO 527-1, -2); and/or

- a tensile strain at yield in a range of from 5 to 9 % (ISO 527-1, -2); and/or

- a Vicat softening temperature (A50) in a range of from 135 to 150 °C (ISO 306); and/or

- a DSC melting point in a range of from 150 to 175°C, measured according to the method described in the experimental part.

Preferably, the polymer composition of the present disclosure comprises component A) in an amount from 10 to 30% by weight, based on the weight of the polymer composition. In embodiments, the polymer composition comprises component A) in amounts of from 10 to 20 % by weight, or in an amount from more than 20 to 30 % by weight, based on the weight of the polymer composition.

The heterophasic propylene polymer A) can be prepared according to known processes such as described in WO2004/087807, EP472946A1 and in WO03/011962A1, each here fully incorporated by reference, by polymerizing the relevant monomers in at least two polymerization stages, wherein the second and each subsequent polymerization stage is carried out in the presence of the polymer produced and the catalyst system used in the immediately preceding polymerization stage. The catalyst is added only in the first polymerization stage, however its activity is such that it is still active for all the subsequent stages. Each stage is carried out in at least one polymerization reactor. The polymerization can occur in liquid phase, gas phase or liquid-gas phase. Examples of suitable reactors are continuously operated stirred reactors, loop reactors, fluidized-bed reactors or horizontally or vertically stirred powder bed reactors. Of course, the reaction can be carried out in a plurality of reactors connected in series. It is possible to carry out the polymerization in a cascade of stirred gas-phase reactors which are connected in series and in which the pulverulent reaction bed is kept in motion by means of a vertical stirrer. The regulation of the molecular weight is carried out by using known regulators, hydrogen in particular.

The polymerization may be carried out in the presence of a highly stereospecific Ziegler-Natta of the type known in the art, more preferably a catalyst system as described in WO2012/139897. In particular, the Ziegler-Natta catalyst system used typically comprises (i) a solid catalytic component containing a titanium compound and an electron-donor compound, both supported on magnesium chloride, and (ii) an Al trialkyl compound and optionally a further electron-donor compound (external donor).

The polymerization temperature is preferably comprised in the range from 20°C to 100°C and the polymerization pressure is preferably from 3.3 to 4.3 MPa for a process in liquid phase and from 0.5 to 3.0 MPa for a process in the gas phase.

The molecular weight of the polymers is regulated by feeding a molecular weight regulator, like hydrogen, into a polymerization reactor.

The amounts of fractions (A1) and (A2) correspond to the split between the stages.

Suitable heterophasic propylene polymers A) are commercially available, e.g. under the tradenames of *Moplen* or *Hifax* marketed by LyondellBasell.

Preferably, component B) of the polymer composition is a copolymer of ethylene and a $C_4$ to $C_{19}$ alpha-olefin. More preferably, component B) is selected from the group consisting of copolymers of ethylene and octene-1, copolymers of ethylene and butene-1 , and combinations thereof. Still more preferably, the component B) is a copolymer of ethylene containing up to and including 50 % by weight of comonomer, preferably from 20 to 45 % by weight of units deriving from a comonomer, based on the weight of the copolymer.

Preferably, component B) is a copolymer of ethylene and octene-1 having at least one, more preferably all, the following properties (SI values):

- is completely soluble in xylene at 25°C; and/or

- a density equal to or lower than 0.890 g/cm$^3$, preferably in a range of from 0.860 to 0.875 g/cm$^3$ (ISO 1183-1:2019); and/or

- a mass melt flow index (ISO 1133-1:2011, 190°C/2.16 kg) equal to or lowerthan 2.0 g/10min, preferably in a range of from 0.40 to 0.80 g/10 min; and/or

- a Mooney viscosity (ML 1+4, 250°F/121°C) in a range of from 25 to 40 MU (ASTM D1646); and/or

- a tensile modulus -100% Secant (Compression Molded) in a range of from 2.2 to 3.0 MPa (ASTM D638, 510mm/min); and/or

- a tensile strength (break, compression molded) in a range of from 8 to 11 MPa (ASTM D638, 510 mm/min); and/or

- a tensile strain at break, compression molded, in a range of from 700 to 900 % (ASTM D638, 510 mm/min); and/or

- a tear strength in a range of from 30 to 45 kN/m (ASTM D624, die C); and/or

- a Vicat softening temperature in a range of from 40 to 52 °C (ASTM D1525); and/or

- a melting temperature (DSC) in a range of from 50 to 60 °C.

Preferably, component C) of the polymer composition is a high density polyethylene (HDPE), more preferably an ethylene homopolymer, having a density equal to or greater than 0.941 $g/cm^3$, more preferably in a range of from 0.945 to 0.970 $g/cm^3$, even more preferably in a range of from 0.955 to 0.965 $g/cm^3$ (ISO 1183-1 :2019). With regard to the identification and analysis of component C) homopolymer in the polymer composition of the present disclosure, reference is made to US2012/14357503A.

Preferably, component C) is a high density ethylene polymer having at least one, more preferably all, the following properties:

- a mass melt flow rate (190 °C/2.16 kg) in a range of from 6 to 10 g/10 min (ISO 1133-1 :2011); and/or
- a mass melt flow rate (190 °C/5.0 kg) in a range of from 19 to 27 g/10 min (ISO 1133-1 :2011); and/or
- a density in a range of from 0.955 to 0.965 $g/cm^3$ (ISO 1183-1); and/or
- a Vicat softening temperature (B50) in a range of from 70 to 80 °C (ISO 306); and/or
- a tensile modulus in a range of from 1300 to 1600 MPa (ISO 527-1,-2); and/or
- a tensile stress at yield in a range of from 25 to 35 MPa (ISO 527-1,-2); and/or
- a tensile strain at yield in a range of from 5 to 9 % (ISO 527-1,-2); and/or
- a shore hardness (Shore D) in a range of from 55 to 70 (ISO 868); and/or
- a melting temperature in a range of from 180 to 250 °C.

Preferably, component D) of the polymer composition is a recycled propylene polymer having an MFR value (ISO 1133-1:2011, 230 °C, 2.16 kg) in a range of from 10 to 35 g/10 min, more preferably in a range of from 12 to 25 g/10 min, even more preferably in a range of from 14 to 20 g/10 min.

Preferably, component D) is a post-industrial resin, a post-consumer resin or a combination thereof. More preferably component D) is a post-consumer resin originating from the mechanical recycling of municipal waste.

The recycled propylene polymer D) preferably comprises at least 50% by weight of polymerized units deriving from propylene. Still more preferably, component D) is a recycled propylene polymer comprising from 3 to 20 % by weight, preferably from 5 to 15 % by weight, of polymerized units deriving from ethylene, and up to 97% by weigh, preferably from 80 to 97 % by weight of polymerized units deriving from propylene, based on the weight of the recycled propylene polymer, wherein the amount of propylene and ethylene polymerized units is determined by NMR in accordance with the method described in the experimental part.

Optionally, but preferably, the recycled propylene polymer D) further comprises polymerized units derived from higher alpha olefins, namely from butene-1, hexene-1 and/or octene-1, in a total amount equal to or lower than 1.0 % by weight, preferably comprised in the range from 0.1 to 0.8 % by weight, based on the weight of the recycled propylene polymer D), wherein the amount of polymerized units deriving from alpha-olefins is determined according to the method described in the experimental part.

The recycled propylene polymer D) preferably has at least two melting temperatures Tm(1) and Tm(2), measured by DSC in accordance with the method described in the experimental part, wherein Tm(1) is in the range of from 155 to 162 °C and the Tm(2) is in the range of from 123 to 128°C.

Next to polymerized units deriving from propylene, ethylene and optionally higher alpha olefins, the recycled propylene polymer D) further comprises minor amounts of thermoplastic polymers (T) different from propylene and ethylene polymers, like terephthalates (eg. PET and PBT), polyurethanes (TPU), and styrenic polymers (eg. PS, ABS, SBS, etc.), polyamides (PA) and combinations thereof. Preferably the total amount of thermoplastic polymers (T) different from propylene and ethylene polymers is lower than 5 % by weigh, preferably lower than 3 % by weight, more preferably in the range of from 0.1 to 2 % by weight, based on the weight of the recycled propylene polymer D), wherein the amount of thermoplastic polymers (T) is determined by NMR, according to the method described in the experimental part.

The FTIR spectrum of a film sample of the recycled propylene polymer D) shows at least one peak, preferably at least two peaks, selected from those centered at the following wavenumbers (cm-1): 3303±2; 1726±2; 1642±2; 1600±2; 1549±2; 695t2, wherein a spectrum in transmission mode of a ca. 0.1 mm thick film obtained by compression molding at 190°C is recorded on a FTIR spectrometer like Nicolet iS50 in the following conditions:

| - number of background scans: | 16 |
| - Number of sample scans: | 16 |
| - Collection length: | 43.2 sec |
| - Resolution: | 2.000 |
| - Apodization: | Happ-Genzel |
| - Phase correction: | Mertz |

Preferably, component D) is recycled polypropylene polymer having at least one, more preferably all, the following properties:

- a density in a range of from 0.91 to 0.92 g/cm$^3$ (ISO 1133-1); and/or
- a tensile modulus (23°C) in a range of from 1100 to 1500 MPa (ISO 527-1,-2); and/or
- a tensile strength at break (23°C) in a range of from 5 to 10 MPa (ISO 527-1,-2); and/or
- a tensile strain at break (23°C) in a range of from 100 to 220 % (ISO 527-1,-2), more preferably from 120 to 170 %; and/or;
- Charpy notched impact (23°C) in a range of from 3 to 10 MPa (ISO 179/1eA); and/or
- an ash content (600 °C, ISO 3451-1) of less than 3 wt%, preferably less than 2 wt%.

The addition of inorganic fillers, component E), such as talc, calcium carbonate and mineral fibers, to the polymer composition also brings about an improvement to some mechanical properties, such as Flexural Modulus and HDT. Talc may also have a nucleating effect.

Preferably, component E) of the polymer composition comprises, or is, talc.

Preferably, component F) of the polymer composition comprises or is a propylene polymer having an MFR(F) value (ISO 1133-1:2011, 230 °C, 2.16 kg) of 100 g/10 min or more. Preferably, the propylene polymer has an MFR(F) value of 120 g/10 min or more, or even 500 g/10 min or more. In one embodiment, the upper limit for the MFR(F) value is 2500 g/10min, and is preferably 2000 g/10min.

Preferably, the polymer composition comprises component F) in an amount in a range of from 3 to 15 % by weight, more preferably in a range of from 5 to 10 % by weight, based on the total weight of the polymer composition.

The polymer composition of the present disclosure may further comprise up to and including 10 % by weight, preferably from 0.1 to 8 % by weight, based on the total weight of the polymer composition, of an additive G) known per se, and preferably selected from processing stabilizers, stabilizers against the effects of light and/or heat, nucleating agents, slip agents, antiblocking agents, lubricants, antioxidants, antistatics, colorants, dyes, and combinations thereof. To improve dispersion of the additive G) in the polymer composition, the additive is generally added to the composition as masterbatch, i.e. dispersed at relatively high concentration in a polymeric carrier, like polypropylene. The amount component G) includes the polymeric carrier, if any.

The composition according to the present disclosure is particularly useful in producing moulded and/or extruded articles, by employing of conventional injection moulding, blow moulding and/or extrusion techniques. Preferably, these articles are body parts for automotive applications, either exterior or interior parts. The exterior parts may be bumper covers, exterior fascia, air dams, and other trim, the interior parts dash boards, air bag covers, and the like.

The following examples are given for illustrative purposes and do not intend to limit the scope of the disclosure. All the above preferred embodiments and features are disclosed alone or in any combination with just some or all of the afore and below mentioned embodiments.

**EXPERIMENTAL PART**

The melt flow rate was determined in accordance with ISO 1133-1:2011.

Comonomer content of virgin propylene polymers: determined by IR using Fourier Transform Infrared Spectrometer (FTIR). The spectrum of a pressed film of the polymer is recorded in absorbance vs. wavenumbers (cm$^{-1}$). The following measurements are used to calculate the ethylene content:

- Area (At) of the combination absorption bands between 4482 and 3950 cm$^{-1}$ which is used for spectrometric normalization of film thickness;
- a linear baseline is subtracted in the range 660-790 cm$^{-1}$ and the remaining constant offset is eliminated.

The method is calibrated by using polymer standards based on $^{13}$C-NMR analyses. Sample preparation: Using a hydraulic press, a thick sheet is obtained by pressing about 1g of sample between two aluminum foils. Pressing

temperature is 180 $\pm$ 10°C and about 10 kg/cm$^2$ pressure for about one minute (minimum two pressing operations for each specimen). A small portion is cut from this sheet to mold a film. Recommended film thickness ranges between 0.02-0.05 cm.

<u>Xylene soluble and insoluble fractions</u>: 2.5 g of polymer sample and 250 ml of xylene are introduced in a glass flask equipped with a refrigerator and a magnetic stirrer. The temperature is raised in 30 minutes up to 135°C. The obtained clear solution is kept under reflux and stirring for further 30 minutes. The solution is cooled in two stages. In the first stage, the temperature is lowered to 100°C in air for 10 to 15 minute under stirring. In the second stage, the flask is transferred to a thermostatically controlled water bath at 25°C for 30 minutes. The temperature is lowered to 25°C without stirring during the first 20 minutes and maintained at 25°C with stirring for the last 10 minutes. The formed solid (XI(tot)) is filtered on quick filtering paper (eg. Whatman filtering paper grade 4 or 541). 100 ml of the filtered solution (S1) is poured in a previously weighed aluminum container, which is heated to 140°C on a heating plate under nitrogen flow, to remove the solvent by evaporation. The container is then kept on an oven at 80°C under vacuum until constant weight is reached. This fraction is the total soluble part of the sample (XS(tot)). In a heterophasic polymer, the xylene soluble fraction of the component (A2) is calculated from the experimentally determined values of XS(tot) and XS(A1) using the following formula:

$$XS(tot) = W(A1) \times XS(A1) + (1-W(A1)) \times XS(A2)$$

wherein W(A1) and W(A2)= 1-W(A1) are the relative amounts of components (A1) and (A2) .

<u>Intrinsic Viscosity</u>: to calculate the value of the intrinsic viscosity IV, the flow time of a polymer solution is compared with the flow time of the solvent (tetrahydronaphthalene). A glass capillary viscometer of Ubbelohde type is used. The oven temperature is adjusted to 135°C. Before starting the measurement of the solvent flow time t0, the temperature must be stable (135$\pm$0.2°C). The sample is dissolved by tetrahydronaphthalene at 135 °C and then it is poured into the capillary viscometer. Sample meniscus detection for the viscometer is performed by a photoelectric device. The passage of the meniscus in front of the upper lamp starts the counter which has a quartz crystal oscillator. The meniscus stops the counter as it passes the lower lamp and the efflux time t is registered and converted into a value of intrinsic viscosity [$\eta$] using Huggins' equation (Huggins, M.L., J. Am. Chem. Soc. 1942, 64, 11, 2716-2718) and the following data:

- concentration (g/dl) of the sample;
- the density of the solvent at a temperature of 135°C;
- the flow time t0 of the solvent at a temperature of 135°C on the same viscometer.

One single polymer solution is used to determine [$\eta$].

<u>Ethylene content of virgin propylene-ethylene copolymers by NMR</u>: $^{13}$C NMR spectra were acquired on a Bruker AV-600 spectrometer equipped with cryoprobe, operating at 160.91 MHz in the Fourier transform mode at 120°C. The peak of the S$\beta\beta$ carbon (nomenclature according to "Monomer Sequence Distribution in Ethylene-Propylene Rubber Measured by 13C NMR. 3. Use of Reaction Probability Mode", C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz. The assignments of the spectra, the evaluation of triad distribution and the composition were made according to Kakugo ("Carbon-13 NMR determination of monomer sequence distribution in ethylene-propylene copolymers prepared with $\delta$-titanium trichloride-diethylaluminum chloride" M. Kakugo, Y. Naito, K. Mizunuma and T. Miyatake, Macromolecules, 1982, 15, 1150) using the following equations:

$$PPP = 100\ T\beta\beta/S \qquad PPE = 100\ T\beta\delta/S \qquad EPE = 100\ T\delta\delta/S$$
$$PEP = 100\ S\beta\beta/S \qquad PEE = 100\ S\beta\delta/S \qquad EEE = 100\ (0.25\ S\gamma\delta + 0.5\ S\delta\delta)/S$$
$$S = T\beta\beta + T\beta\delta + T\delta\delta + S\beta\beta + S\beta\delta + 0.25\ S\gamma\delta + 0.5\ S\delta\delta$$

The molar percentage of ethylene content was evaluated using the following equation:

$$E\%\ mol = 100 * [PEP+PEE+EEE]$$

The weight percentage of ethylene content was evaluated using the following equation:

$$E\% \text{ wt.} = \frac{100 * E\% \text{ mol} * MW_E}{E\% \text{ mol} * MW_E + P\% \text{ mol} * MW_P}$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP mmT$\beta\beta$ (28.90-29.65 ppm) and the whole T$\beta\beta$ (29.80-28.37 ppm).

<u>Melting point</u>: determined by DSC, according to ISO 11357-3:2018, at scanning rate of 20°C/min, both in cooling and heating, on a sample of weight between 5 and 7 mg, under inert $N_2$ flow. Instrument calibration made with Indium.

<u>Determination of the composition of component D) via 1H and 13C-NMR</u>: 13C-NMR was used to determine the relative amount of ethylene, propylene 1-butene, 1-hexene and 1-octene in propylene copolymers, and 1H-NMR provided a quantification of the composition of aliphatic and aromatic components and the relative amounts of polystyrene and polyethylene terephthalate eventually present in the PCR. 13C-NMR and 1H spectra were acquired on a BrukerAV600 spectrometer equipped with cryoprobe, operating at 150.91 MHz and 600.13 MHz respectively in the Fourier transform mode at 120 °C. About 30 mg of sample were dissolved at 120°C in 0.5 ml of 1,1,2,2 tetrachloroethane-d2 added with 0.1 mg/ml of Irganox 1010 (AO 1010) as antioxidant

For 13C-NMR spectra the peak of the $S_{\delta\delta}$ carbon (nomenclature according C.J. Carman, R.A. Harrington and C.E. Wilkes, Macromolecules, 10, 3, 536 (1977)) was used as internal reference at 29.9 ppm. Each spectrum was acquired with a 90° pulse, 15 seconds of delay between pulses and CPD to remove 1H-13C coupling. 512 transients were stored in 65 K data points using a spectral window of 9000 Hz.

For 1H-NMR spectra the peak of the residual C2DHCl4 at 5.95 ppm was used as internal reference. Each spectrum was acquired with a 90° pulse, 5 seconds of delay between pulses and 128 transients stored in 64K data points using a spectral window of 9600 Hz.

In the 13C-NMR spectrum only the signals from Ethylene, Propylene, 1-Butene, 1-Hexene and 1-Octene copolymers were considered (assignments of peak relevant for quantification are reported in Table 1). Triad distribution (considering only EBE, EHE and EOE due to the low amount of these comonomers) was obtained from the integration of relevant peaks in 13C NMR spectrum (possible overlaps of the peaks of the antioxidant AO1010 were taken into account), using the following relations:

$$PPP = 100\ I_{11}/\Sigma$$

$$\text{for } I_3/I_4 < 1: PPE = 100\ I_3/\Sigma$$

$$\text{for } I_3/I_4 > 1: PPE = 100\ (I_8 - 6I_4)/\Sigma$$

$$EPE = 100\ I_7/\Sigma$$

$$EBE = 100\ I_1/\Sigma$$

$$EHE = 100\ I_6/\Sigma$$

$$EOE = 100\ (I_2 - I_6)/\Sigma$$

$$XEX = 100\ I_{13}/\Sigma$$

$$XEE = 100 \ (I_{12} - I_2)/\Sigma$$

$$EEE = 100 \ (0.5 \ (I_{10} - I_2) + 0.25 \ (I_9 + I_8))/\Sigma$$

Where:

$$\Sigma = I_{11} + (I_3 \ or \ (I_8 - 6I_4)) + I_7 + I_1 + I_6 + I_2 - I_6 + I_{13} + I_{12} - I_2 + 0.5 \ (I_{10} - I_2) + 0.25 \ (I_9 + I_8)$$

and $I_n$ are the areas of the corresponding carbon following the numbering scheme reported in Table 1 and X can be propylene, 1-butene, 1-hexene or 1-octene

The molar content of Ethylene, Propylene, 1-Butene, 1-Hexene and 1-Octene is obtained from triads using the following relations:

$$P \ (m\%) = PPP + PPE + EPE$$

$$B \ (m\%) = EBE$$

$$H \ (m\%) = EHE$$

$$O \ (m\%) = EOE$$

$$E \ (m\%) = EEE + XEE + XEX$$

Molar content was transformed in weight using monomers molecular weight.

The molar content of Polyethylene terephthalate (PET), Polystyrene (PS) and ethylene/propylene/1-butene/1-hexene/1-octene copolymers were obtained from 1H spectra. The aromatic hydrogen peaks of PET and PS (assignments according to Table 2) were used, while the amount of ethylene/propylene/1-Butene/1-Hexene/1-Octene copolymers was determined by the integral of all the aliphatic hydrogens, from which the contribution of the 3 aliphatic hydrogens of the polystyrene was subtracted. Molar amounts of PET, PS and E/P/B/H/O copolymers were evaluated from the following relations:

$$PET = 100 \ 0.25 \ I_a /\Sigma$$

$$PS = 100 \ 0.5 \ I_c /\Sigma$$

$$\text{Total aliphatic E/P/B/H/O copolymers} = 100 \ 0.5 \ (I_e - 3PS - 9I_d)/\Sigma$$

Where

$$\Sigma = 0.25 \ I_a + 0.5 \ I_c + 0.5 \ (I_e - 3PS - 9I_d).$$

Molar content was transformed in weight percentage using monomers molecular weight considering the MW of $CH_2$ to estimate the weight contribution from ethylene/propylene/1-butene/1-hexene/1-octene copolymers. The weight content of P, E, B, H and O obtained from 13C spectrum was rescaled to obtain the weight percentage in the whole sample by multiplying each value (wt%) from triads with the rescaling factor "RF":

$$RF = [100 - PET(wt\%) - PS(wt\%)]/100$$

where PET(wt%) and PS(wt%) are the compositions obtained from 1H spectrum.

| Assignments of the 13C-NMR spectrum of ethylene/propylene/butene-1/hexene-1/octene-1 | | | |
|---|---|---|---|
| Number | Chemical Shift (ppm) | Carbon | Sequence |
| 1 | 39.6 | $T_{\delta\delta}$ | EBE |
| 2 | 38.8 | $T_{\delta\delta}$ | EOE + EHE |
| 3 | 38.2 - 37.6 | $S_{\alpha\gamma}$ | PE |
| 4 | 36.2 | $CH_2$ | AO1010 |
| 6 | 34.0 | $4B_4$ | EHE |
| 7 | 33.3 - 33.2 | $T_{\delta\delta}$ | EPE |
| 8 | 30.8 - 30.7 | $T_{\beta\delta}$ | PPE |
| 8 | 30.3 | $S_{\gamma\delta}$ | XEEE |
| 9 | 30.2 | $S_{\gamma\delta}$ | PEEE |
| 10 | 29.9 | $S_{\delta\delta} + 4B_6$ | EEE + O |
| 11 | 28.8 - 28.2 | $T_{\beta\beta}$ | PPP |
| 12 | 27.4 - 26.7 | $S_{\beta\delta} + 5B_6$ | XE + O |
| 13 | 24.7 - 24.1 | $S_{\beta\beta}$ | XEX |

| Assignments of the 1H-NMR spectrum of ethylene/propylene/butene-1/hexene-1/octene-1 copolymers containing PET and PS | | | |
|---|---|---|---|
| Number | Chemical Shift (ppm) | Proton | Sequence |
| a | 8.08 | CH | PET |
| b | 7.20 - 6.81 | CH | PS |
| c | 6.81 - 6.33 | CH | PS |
| d | 2.91 | $CH_2$ | AO1010 |
| e | 1.80 - 0.70 | CH + $CH_2$ + CH3 | Total aliphatic |
| | 1.25 | CH + $CH_2$ | PS |

Tensile properties of propylene polymers were determined according to ISO 527-1,-2 on tensile bars.

Impact properties: Charpy notched impact test according to the method ISO 179-2/1eA on tensile bars.

Flexural modulus: determined according to ISO 178:2019 on tensile bars.

Shrinkage: measured on injection molded plaques. 10 test specimen are obtained by injection molding of the polymer composition in a 194,96 x99,66 x2,48 mm mold using a Krauss Maffei KM 160 CX injection molding machine (mold temperature 35°C, injection speed 33 mm/s, cooling time 30 min.). The specimens are conditioned for 48h at a temperature of 23±2°C before testing. The dimensions of the specimens are measured with a micrometer and compared to the dimensions of the reference metallic plaque having the same dimensions of the mould. The shrinkage is calculated as mean value over 10 measures using the following formula:

$$Ci = (100 \times (DR-DS))/DR$$

wherein

- Ci is the shrinkage in one selected direction (longitudinal or transverse);
- DR is the dimension of the reference metallic plaque in the selected direction; and
- DS is the dimension of the sample in the selected direction..
- HDT: determined according to ISO 75 on tensile bars.

Vicat softening temperature: determined according to ISO 306 on tensile bars.

**RAW MATERIALS**

Component A): heterophasic propylene polymer comprising 73 % by weight of a fraction (A1) comprising a propylene homopolymer with melt flow rate 20 g/10min (230°C/2.16Kg) which has solubility in xylene at 25°C of 2.0 % by weight; and 27 % by weight of a fraction (A2) comprising a propylene-ethylene copolymer containing 49 % by weight of polymerized units deriving from ethylene. The heterophasic propylene polymer has melt flow rate of 7.0 g/10min (230°C/2.16Kg), a total xylene soluble content at 25°C of 24 % by weight and an intrinsic viscosity of the xylene soluble fraction of 3.25 dl/g. Mechanical properties of component A) are illustrated in Table 1.

Component B): Engage 8150, marketed by Dow, an ethylene-octene copolymer having density of 0.868 g/cm$^3$ and a melt flow rate (190°C/2.16 Kg) of 0.50 g/10min.

Component C): HDPE having melt flow rate of 8.0 g/10min (190°C/2.16Kg) and of 23 g/10min (190°C/5.0Kg), and density of 0.960 g/cm$^3$.

Component D): a recycled propylene polymer sorted from municipal plastic waste containing ca. 9.8 % by weight of polymerized units derived from ethylene, less than 0.5 % by weight of polymerized units deriving from higher alpha olefins, less than 0.5 % by weight of further thermoplastic polymers (PET and polystyrene), and the polymerized units up to 100% deriving from propylene. The recycled copolymer has the properties illustrated in Table 1.

Component E): talc.

Component F): metallocene propylene homopolymer having melt flow rate of 1800 g/10min (230°C/2.16Kg).

Homo-PP: metallocene propylene homopolymer having melt flow rate of 140 g/10min (230°C/2.16Kg)

**Examples E1-E2 and comparative example CE3**

The polymer compositions were prepared by blending the components indicated in Table 1 in an extruder, operated at temperature ranging from 200°C (zone 1) to 220°C (zone 5), at 295 rpm, with a throughput of 40 kg/h.

The composition were injection molded into test specimens 80 x 10 x 4 mm obtained according to the method ISO 1873-2:2007, tested and visually inspected. Results are illustrated in Table 1.

| Table 1 | | | | | | |
|---|---|---|---|---|---|---|
| | | **E1** | **E2** | **CE3** | **(A)** | **(D)** |
| Component A) | wt% | 26.6 | 12.0 | 35.3 | | |
| Component B) | wt% | 12.0 | 12.0 | 10.0 | | |
| Component C) | wt% | 6.0 | 6.0 | 6.0 | | |
| Component D) | wt% | 20.0 | 34.6 | - | | |
| Component E) | wt% | 19.8 | 19.8 | 15.0 | | |
| Component F) | wt% | 7.0 | 7.0 | - | | |
| Homo-PP | wt% | - | - | 26.0 | | |
| Additive package | wt% | 8.6 | 8.6 | 7.7 | | |
| | | | | | | |
| MFR (230°C/2.16Kg) | g/10min | 11.6 | 13.3 | 18.8 | 7.0 | 16.0 |
| MVR (230°C/2.16Kg) | cm$^3$/10min | 13.0 | 14.9 | 22.1 | - | 21.1 |
| HDT A (1820 kPa) | °C | 52.2 | 53.1 | 51.4 | - | 50.6 |
| HDT B (455 kPa) | °C | 92.6 | 87.8 | 88.7 | 77.0 | 86.3 |
| Vicat A | °C | 127.5 | 127.7 | 131.3 | 143.0 | 142.7 |
| Vicat B | °C | 55.8 | 53.3 | 52.3 | - | 72.4 |
| Tensile strength at yield | MPa | 18.5 | 19.2 | 19.0 | 21.5 | 27.8 |
| Tensile strain at break | % | 303 | 269 | 74 | 400 | 208 |
| Flexural modulus | MPa | 1742 | 1794 | 1661 | 1000 | 1239 |
| Charpy Impact (25°C) | kJ/m$^2$ | 49.3 | 35.0 | 30.5 | 45 | 5.4 |
| Charpy impact (-30°C) | kJ/m$^2$ | 3.6 | 3.0 | 3.7 | 6 | 1.9 |

(continued)

| Table 1 | | E1 | E2 | CE3 | (A) | (D) |
|---|---|---|---|---|---|---|
| Shrinkage (48h/25°C at 40 bar longitudinal) | % | 0.68 | 0.72 | 0.79 | - | 1.33 |
| Shrinkage (48h/25°C at 40 bar transversal) | % | 1.00 | 1.04 | 1.09 | - | 1.64 |

As shown in Table 1 above, the compositions of the disclosure are in particular characterized by, e.g., advantageously increased elongation at break, and favorably lowered shrinkage.

Other features, advantages and embodiments of the subject matter of the present disclosure disclosed herein will be readily apparent to those exercising ordinary skill after reading the foregoing disclosure. In this regard, while specific embodiments of the subject matter of the present disclosure have been described in considerable detail, variations and modifications of these embodiments can be effected without departing from the spirit and scope of the disclosure as described and claimed.

**Claims**

1. A polymer composition comprising, based on the weight of the polymer composition:

   A) 8 % to 35 % by weight of heterophasic propylene polymer,
   B) 3 % to 20 % by weight of polyolefin elastomer,
   C) 0 % to 10 % by weight of high-density polyethylene (HDPE),
   D) 10 % to 50 % by weight of recycled propylene polymer, and
   E) 1 % to 25 % by weight of mineral filler,
   the polymer composition having a melt volume flow rate (MVR, ISO 1133-1:2011, 230 °C, 2.16 kg) of 20 cm$^3$/10 min or less,
   preferably wherein the MVR is in a range of from 10 to 17 cm$^3$/10 min.

2. The polymer composition of claim 1, further comprising

   F) up to 15 % by weight of propylene polymer having a melt flow rate, MFR, value (ISO 1133-1:2011; 230 °C, 2.16 kg) of 100 g/10 min or more, preferably wherein the propylene polymer is a propylene homopolymer, and/or
   G) up to 10 % by weight of further additives.

3. The polymer composition of any of claims 1 or 2, having tensile strain at break (ISO 527-1,-2) equal to or greater than 200%, preferably in a range of from 210% to 400%, more preferably in a range of from 230 % to 350 %, still more preferably in a range of from 250 % to 320 %.

4. The polymer composition of any of the preceding claims, having

   - a longitudinal shrinkage lower than 0.8%, preferably in a range of from 0.65 % to 0.75 %, and
   - a transversal shrinkage lower than 1.1%, preferably in a range of from 0.95 % to 1.05 %,

   wherein the shrinkage is determined in accordance with the method described in the experimental part.

5. The polymer composition of any of the preceding claims, wherein component A) is a heterophasic propylene polymer comprising:

   - from 10 to 95 % by weight of a polymer fraction (A1) comprising a propylene polymer containing from 0 to 10 % by weight, based on the weight of the polymer fraction (A1), of copolymerized units deriving from ethylene and/or from at least one C4-C10 alpha-olefin, the polymer fraction (A1) having solubility in xylene at 25°C equal to or lower than 5 % by weight, based on the weight of the polymer fraction (A1); and
   - from 5 to 90 % by weight of a polymer fraction (A2) comprising an ethylene polymer with from 30 to 60 % by weight, preferably from 40 to 55% by weight, based on the weight of the polymer fraction (A2), of polymerized units derived from propylene and/or from at least one C4-C10 alpha-olefin, the polymer fraction (A2) having solubility in xylene at 25°C XS(A2) greater than 70 % by weight, based on the weight of the polymer fraction (A2),

wherein the amount of fraction (A1) and of fraction (A2) is based on the weight of the heterophasic propylene polymer (A).

6. The polymer composition of any of the preceding claims, wherein component A) is a heterophasic propylene polymer having:

- a mass melt flow rate MFR(A) (ISO 1133-1:2011, 230 °C/2.16 kg) in a range of from 4 to 15 g/10min, preferably from 5 to 11 g/10 min; and/or
- solubility in xylene at 25°C XS(A) ranging from 15 to 35 % by weight, based on the weight of the polymer composition; and/or
- an intrinsic viscosity of the fraction soluble in xylene at 25°C XSIV(A) in the range from 2.0 to 4.0 dl/g, the XSIV being measured in tetrahydronaphthalene at 135 °C according to the method described in the experimental part; and/or
- a flexural modulus in a range of from 800 to 1200 MPa (ISO 178:2019); and/or
- a tensile modulus in a range of from 700 to 1000 MPa (ISO 527-1, -2) ; and/or
- a tensile stress at break in a range of from 15 to 19 MPa (ISO 527-1, -2); and/or
- a tensile stress at yield in a range of from 20 to 24 MPa (ISO 527-1, -2); and/or
- a tensile strain at break in a range of from 300 to 500 % (ISO 527-1, -2); and/or
- a tensile strain at yield in a range of from 5 to 9 % (ISO 527-1, -2); and/or
- a Vicat softening temperature (A50) in a range of from 135 to 150 °C (ISO 306); and/or
- a DSC melting point in a range of from 150 to 175°C, measured according to the method described in the experimental part.

7. The polymer composition of any of the preceding claims, wherein component B) comprises copolymer of ethylene and a $C_4$ to $C_{19}$ alpha olefin,
preferably wherein component B) is selected from copolymers of ethylene and octene-1, copolymers of ethylene and butene-1, and combinations thereof.

8. The polymer composition of any of the preceding claims, wherein component C) is a high density polyethylene HDPE having a density in a range of from (ISO 1183-1:2019) of equal to or greater than 0.941 g/cm$^3$, preferably in a range of from 0.945 to 0.970 g/cm$^3$, more preferably in a range of from 0.955 to 0.965 g/cm$^3$.

9. The polymer composition of any of the preceding claims, comprising

Component A) in an amount in the range of from 10 to 30 % by weight, and/or
component B) in an amount in a range of from 5 to 15 % by weight, and/or
component C) in an amount in a range of from 2 to 8 % by weight, and/or
component D) in an amount in a range of from 15 to 37 % by weight.

10. The polymer composition of any of the preceding claims, wherein component D) is a recycled propylene polymer having an MFR value (ISO 1133-1:2011, 230 °C, 2.16 kg) in a range of from 10 to 35 g/10 min, preferably in a range of from 12 to 25 g/10 min, more preferably in a range of from 14 to 20 g/10 min.

11. The polymer composition of any of the preceding claims, comprising component D) in an amount in a range of from 15 to 37 % by weight.

12. The polymer composition of any of the preceding claims, wherein component E) comprises talc.

13. The polymer composition of any of the preceding claims 2 to 12, wherein component F) comprises propylene polymer having an MFR value (ISO 1133-1:2011, 230 °C, 2.16 kg) of 120 g/10 min or more,
preferably wherein the propylene polymer has an MFR value of 500 g/10 min or more.

14. The polymer composition of any of the preceding claims 2 to 13, comprising component F) in an amount in a range of from 3 to 15 % by weight, preferably in a range of from 5 to 10 % by weight.

15. The polymer composition of any of the preceding claims 2 to 14, wherein the additive G) is selected from processing stabilizers, stabilizers against the effects of light and/or heat, nucleating agents, slip agents, antiblocking agents, lubricants, antioxidants, antistatics, colorants, dyes, and combinations thereof.

## EUROPEAN SEARCH REPORT

**Application Number**

EP 24 18 0073

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/348705 A1 (WANG JINGBO [AT] ET AL) 2 November 2023 (2023-11-02) * ie 3 table 3 * | 1-4,6-8, 12,15 | INV. C08L23/12 |
| X | EP 4 194 504 A1 (BOREALIS AG [AT]) 14 June 2023 (2023-06-14) * ie 4 * | 1-4,6,7, 10-12,15 | |
| A | US 2023/257563 A1 (KAHLEN SUSANNE [AT] ET AL) 17 August 2023 (2023-08-17) * ie 1-2 page 10 * | 1-15 | |

**TECHNICAL FIELDS SEARCHED (IPC)**

C08L

The present search report has been drawn up for all claims

| Place of search | Date of completion of the search | Examiner |
|---|---|---|
| Munich | 24 October 2024 | Ritter, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 24 18 0073

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | | Publication date | Patent family member(s) | | Publication date |
|---|---|---|---|---|---|
| US 2023348705 | A1 | 02-11-2023 | BR 112023002198 | A2 | 03-10-2023 |
| | | | CN 116134087 | A | 16-05-2023 |
| | | | EP 4196526 | A1 | 21-06-2023 |
| | | | US 2023348705 | A1 | 02-11-2023 |
| | | | WO 2022034126 | A1 | 17-02-2022 |
| EP 4194504 | A1 | 14-06-2023 | CN 118401603 | A | 26-07-2024 |
| | | | EP 4194504 | A1 | 14-06-2023 |
| | | | WO 2023104762 | A1 | 15-06-2023 |
| US 2023257563 | A1 | 17-08-2023 | CN 116113666 | A | 12-05-2023 |
| | | | EP 4196527 | A1 | 21-06-2023 |
| | | | US 2023257563 | A1 | 17-08-2023 |
| | | | WO 2022034125 | A1 | 17-02-2022 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11203683 B2
- WO 2004087807 A
- EP 472946 A1
- WO 03011962 A1
- WO 2012139897 A
- US 201214357503 A

**Non-patent literature cited in the description**

- **HUGGINS, M.L.** *J. Am. Chem. Soc.*, 1942, vol. 64 (11), 2716-2718
- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with δ-titanium trichloride-diethylaluminum chloride. *Macromolecules*, 1982, vol. 15, 1150
- **C.J. CARMAN** ; **R.A. HARRINGTON** ; **C.E. WILKES**. *Macromolecules*, 1977, vol. 10, 536
- **C.J. CARMAN** ; **R.A. HARRINGTON** ; **C.E. WILKES**. *Macromolecules*, 1977, vol. 10 (3), 536